# EUROPÄISCHE PATENTSCHRIFT

(11) **EP 0 645 502 B1**
(45) Veröffentlichungstag und Bekanntmachung des Hinweises auf die Patenterteilung: **12.05.1999**
(21) Anmeldenummer: 94110624.7
(22) Anmeldetag: 07.07.1994
(51) Int. Cl.: E04B 1/38, F16B 13/12, F16B 13/08

(54) **Spreizanker aus Metall und Verfahren zu dessen Herstellung**
Metal expansion-shell bolt and method to make same
Boulon à expansion en métal et procédé pour sa fabrication

(30) Priorität: 24.09.1993 DE 4332558
(43) Veröffentlichungstag der Anmeldung: 29.03.1995
(73) Patentinhaber: fischerwerke Artur Fischer GmbH & Co. KG, D-72178 Waldachtal (DE)
(72) Erfinder: Weber, Wilfried, Dipl.-Ing. (FH), D-72296 Schopfloch-Unteriflingen (DE)

(56) Entgegenhaltungen:
- AT-B- 352 669
- FR-A- 2 000 417
- FR-A- 2 403 482
- US-A- 2 685 221

## Beschreibung

Die Erfindung betrifft einen Spreizanker aus Metall mit einem Bolzen und einer Spreizhülse gemäß Oberbegriff des Anspruches 1, sowie ein Verfahren zur Herstellung der Spreizhülse gemäß Oberbegriff des Anspruches 7.

Aus der US-A-2 685 221 ist ein Spreizanker aus Metall bekannt, dessen Bolzen mehrere in einem Gewindegang zusammenhängende Spreizkonen aufweist. Auf diesen Spreizkonen sitzt eine aus zwei Schalen bestehende Spreizhülse, die mit einem auf den Spreizkonen aufsitzenden Innengewinde versehen ist. Beim Einziehen des Bolzens in die Spreizhülse mittels einer sich am Befestigungsgegenstand abstützenden Mutter wird über die Spreizkonen die Spreizhülse radial nach außen gedrückt. Durch die auf der gesamten Länge der Spreizhülse in Eingriff stehenden Konen ergibt sich eine weitgehenst gleichmäßige Aufspreizung der Spreizhülse auf ihrer gesamten Länge.

Die Spreizhülse des bekannten Spreizankers besteht aus zwei Halbschalen, in denen die Gewindegänge eingearbeitet sind. Dadurch werden beim Einziehen des Bolzens in die Spreizhülse die beiden Halbschalen lediglich in einer Spreizrichtung radial nach außen gedrückt. Die 90° zur Schlitzebene versetzte Spreizrichtung führt zu einer Linienberührung der beiden Halbschalen der Spreizhülse, die trotz hoher Einzugskraft nur geringe Verankerungskräfte zuläßt. Eine Erhöhung der Einzugskraft ergibt sich auch dadurch, daß der Gewindegang in den beiden Halbschalen der Spreizhülse dem die Spreizkonen des Bolzens bildenden Gewindegang angepaßt ist. Beim Einziehen des Bolzens verschieben sich die durchmesserkleineren Konenbereiche der Spreizhülse auf die durchmessergrößeren Spreizkonenbereiche des Bolzens. Dadurch kommt ein verstärkter Druck auf die Längskanten der beiden Halbschalen, der wegen der Steifigkeit der Halbschalen die Einzugskraft erhöht ohne gleichzeitig die Spreizwirkung und damit die Haltekraft des Spreizankers zu verstärken. Ferner ist es bei dem bekannten Spreizanker erforderlich, mit Drahtringen die beiden Schalen der Spreizhülse auf dem Bolzen zu halten.

Der Erfindung liegt die Aufgabe zugrunde, einen Spreizanker aus Metall zu schaffen, der eine auf der gesamten Länge der Spreizhülse wirksame Verspreizung mit hoher Haltekraft ermöglicht, der einfach und mit geringem Kraftaufwand montierbar und kostengünstig herstellbar ist.

Die Lösung dieser Aufgabe wird durch die im Anspruch 1 und 7 angegebenen Merkmale erreicht. Die Spreizhülse des Spreizankers weist ein Innengewinde auf, entlang dem durch U-förmige Freisparungen eine Vielzahl von Spreizabschnitten gebildet sind. Durch Einziehen des Bolzens werden die Spreizabschnitte von den in einem Gewindegang zusammenhängenden Spreizkonen unabhängig voneinander nach außen gedrückt. Die einzelnen Spreizabschnitte können sich somit den Unregelmäßigkeiten eines Bohrloches leicht anpassen und sind gleichmäßig auf die gesamte Länge und Umfang der Spreizhülse verteilt. Die nur an einer Stirnkante an die Spreizhülse angebundenen Spreizabschnitte lassen sich leicht aufbiegen, so daß geringe Einzugskräfte zur Aufspreizung der Spreizabschnitte erforderlich sind. Durch die gleichmäßige Verteilung der Spreizabschnitte ergibt sich eine schonende, jedoch hohe Haltekräfte bewirkende Verankerung.

Die seitlichen Freisparungen zweier benachbarter Spreizabschnitte können zusammengefaßt als eine Freisparung ausgebildet sein. Verbleibt zwischen den Spreizabschnitten jedoch ein Steg, dessen Innenwandung ebenfalls die Konuskontur des Innengewindes aufweist, ist es zweckmäßig, die Wandungsdicke der Stege durch Einkerbungen an der Außenwandung zu reduzieren. Damit kommt die Spreizhülse im Bereich der Stege nicht zur Anlage an der Bohrlochwandung im Mauerwerk. Durch die gleichzeitig reduzierte Wandungsdicke der Stege lassen sich diese bei der Axialverschiebung des Bolzens gegenüber der Spreizhülse leicht wegdrücken. Die Einzugskraft wird somit nahezu vollständig in Spreizkraft für die Spreizabschnitte umgesetzt. Die Reduzierung der Wandstärke kann mit Ausnahme der Spreizabschnitte auf die gesamte Spreizhülse ausgedehnt werden.

Um zu verhindern, daß bei einer am Bolzen angreifenden Zugkraft diese sich aus der Spreizhülse ausdreht, ist eine Selbsthemmung zwischen Spreizhülse und Bolzen erforderlich. Diese Selbsthemmung wird durch einen Steigungwinkel der in einem Gewindegang angeordneten Spreizkonen des Bolzens und der Spreizabschnitte der Spreizhülse zwischen etwa 20° und 50° erreicht. Eine günstige Verteilung der Spreizabschnitte ergibt sich bei einem Steigungwinkel von 25°.

Desweiteren ist es zweckmäßig, wenn zwischen dem Gewindegang der Spreizhülse und des Bolzens ein Spiel besteht und die Steigung des Gewindeganges der Spreizhülse geringfügig steiler ist als der Gewindegang am Bolzen. Mit dieser Ausgestaltung wird erreicht, daß die näher am Bohrlochgrund liegenden Spreizabschnitte zuerst und etwas stärker aufgespreizt werden als die näher zur Bohrlochmündung liegenden Spreizabschnitte. Damit wird eine Spannungsverteilung erreicht, die der höheren Belastbarkeit des Bauteiles mit zunehmender Bohrlochtiefe angepaßt ist.

Desweiteren kann die Stirnseite der Spreizhülse an ihrem Einführende geschlossen sein. Damit wird vermieden, daß beim Einsetzen des Spreizankers in das Bohrloch im Mauerwerk Bohrmehl in die Spreizhülse gelangt, das unter Umständen das Aufspreizen behindert. Durch die geschlossene Stirnseite der Spreizhülse ergibt sich auch eine Eindrehbegrenzung für den Bolzen, so daß dieser in der Spreizhülse zwangsläufig richtig positioniert ist. Das beim Einziehen des Bolzens auf die Spreizhülse wirkende Drehmoment kann durch am hinteren Ende der Spreizhülse angeordneten und in die Bohrlochwandung eingreifenden Vorsprünge aufgefangen werden.

Eine einfache und kostengünstige Herstellung der Spreizhülse ist mit dem ansich bekannten Pulverspritzgußverfahren möglich. Danach wird die Spreizhülse aus Metallpulver im Spritzgußverfahren unter Verwendung eines Bindersystems und nachträglichem Entbindern und Sintern hergestellt. Zur Ausformung des Innengewindes der Spreizhülse wird ein ausdrehbarer Gewindekern verwendet. Das Werkzeug zur Herstellung der Metall-Spreizhülse entspricht weitgehendst einem Kunststoff-Spritzwerkzeug. Lediglich der beim Entbindern auftretende Schwund des Spritzlings ist im Spritzgußwerkzeug zu berücksichtigen.

Die Erfindung wird nachfolgend anhand von in der Zeichnung dargestellten Ausführungsbeispielen näher erläutert.

Es zeigen:
- Figur 1: den Spreizanker in einem Bohrloch eines Mauerwerks,
- Figur 2: die Spreizhülse im Längsschnitt,
- Figur 3: einen Schnitt in Längsrichtung eines Spreizabschnittes gemäß der Schnittlinie A-A,
- Figur 4: einen Schnitt in Längsrichtung eines Steges gemäß der Schnittlinie B-B,
- Figur 5: eine vergrößerte Abwicklung des Gewindeganges der Spreizhülse und gestrichelt des Gewindeganges des Bolzens.

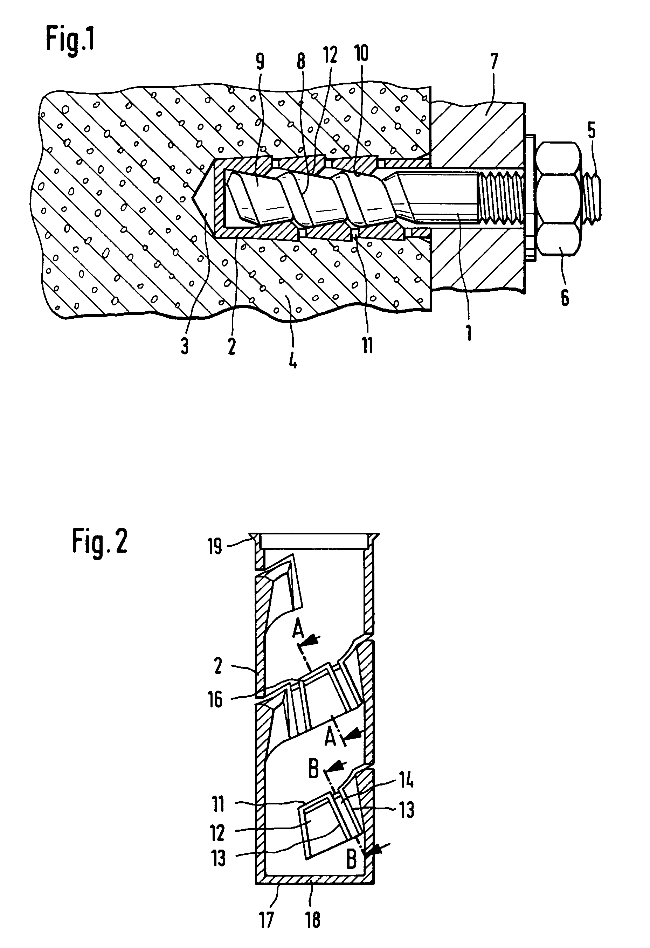

Der in Figur 1 dargestellte Spreizanker aus Metall besteht aus dem Bolzen 1 und der Spreizhülse 2, die in einem Bohrloch 3 eines Mauerwerks 4 eingesetzt ist. Das hintere Ende des Bolzens 1 ist mit einem Außengewinde 5 versehen, auf das eine Muttter 6 zur Befestigung eines Gegenstandes 7 an das Mauerwerk 4 aufgeschraubt ist. Am vorderen Ende des Bolzens 1 sind mehrere in einem Gewindegang 8 zusammenhängende Spreizkonen 9 angeordnet.

In der Spreizhülse 2 befindet sich ein dem Gewindegang 8 des Bolzens 1 angepaßtes Innengewinde 10. Durch U-förmige Freisparungen 11 entstehen in gleichmäßigen Abständen entlang des Innengewindes 10 der Spreihülse 2 Spreizabschnitte 12, die auf den Spreizkonen 9 aufsitzen. Bei der axialen Verschiebung des Bolzens 1 gegenüber der im Bohrloch 3 des Mauerwerks 4 eingesetzten Spreizhülse 2 durch Aufdrehen der Mutter 6 auf das Außengewinde 5 werden die Spreizabschnitte 12 aufgespreizt. Dadurch wird der Spreizanker im Bohrloch 3 verankert und gleichzeitig der Befestigungsgegenstand 7 an die Außenfläche des Mauerwerks 4 verspannt.

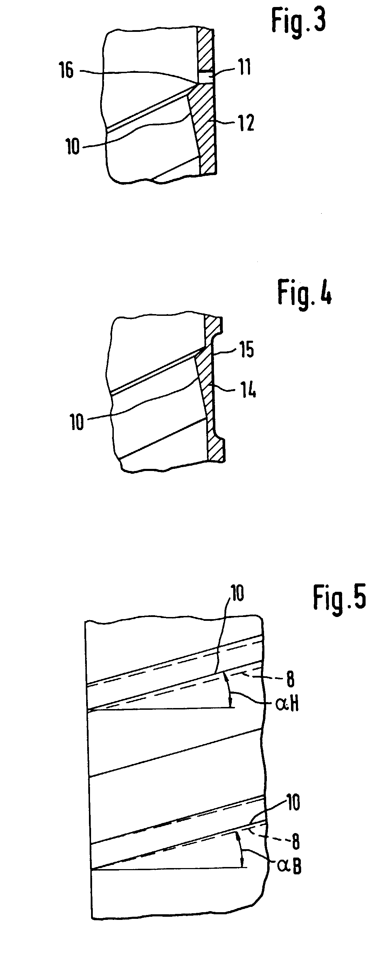

Figur 2 zeigt die Spreizhülse 2 ohne eingesetztem Bolzen 1. Zwischen den Freisparungen 11 der Seitenkanten 13 zweier benachbarter Spreizabschnitte 12 verbleibt ein Steg 14, dessen Innenwandung ebenfalls die Kontur des Gewindeganges 10 aufweist. Zur Reduzierung der Einzugskraft des Bolzens 1 in die Spreizhülse 2 ist die Außenwandung der Spreizhülse im Bereich des Steges 14 mit einer Einkerbung 15 versehen, die die Wandungsdicke des Steges 14 reduziert (siehe Figur 4, Schnitt B-B).

Den Schnitt A-A eines Spreizabschnittes 12 zeigt Figur 3. Der Spreizabschnitt 12 ist an einer Stirnkante 16 und den beiden Seitenkanten 13 freigespart, so daß die Spreizabschnitte 12 leicht aufspreizen können.

Die Herstellung der Spreizhülse 2 erfolgt im Pulver-Spritzguß unter Verwendung eines Spritzgußwerkzeuges, das einen ausdrehbaren Kern für die Ausbildung des Innengewindes 10 der Spreizhülse 2 aufweist. Bei diesem Verfahren wird ein Metallpulver in einem beheizten Kneter mit Hilfe polymerer organischer Bindemittel (Wachse, Kunststoffe) plastifiziert und anschließend granuliert. Auf einer herkömmlichen Spritzguß-Maschine wird die Spreizhülse unter Berücksichtigung des Schwundmaßes in einem Spritzgußwerkzeug abgespritzt. Nach dem Entbindern und Sintern weist die Spreizhülse ihre endgültige Form auf. Aufgrund der Herstellung der Spreizhülse im Spritzgußverfahren ist es möglich, die Spreizhülse an ihrer vorderen Stirnseite 17 mit einer Wandung 18 abzuschließen. Diese Wandung dient gleichzeitig auch als Endanschlag beim Eindrehen des Bolzens 1 in die Spreizhülse 2. Beim Aufdrehen der Mutter 6 auf den Bolzen 1 kann ein auf die Spreizhülse 2 wirkendes Drehmoment auftreten. Um ein Mitdrehen zu verhindern, sind am hinteren Ende der Spreizhülse 2 dreiecksförmige Vorsprünge 19 als Drehsicherung angeordnet.

Figur 5 zeigt in einer vergrößerten Abwicklung den Gewindegang 10 der Spreizhülse 2 in durchgezogener Linie und den Gewindegang 8 des Bolzens in gestrichelter Linie. In der Darstellung der Figur 5 ist erkennbar, daß die Steigung des Gewindegangs 8 des Bolzens 1 (α_{B}) etwas geringer ist als die Steigung des Gewindegangs 10 der Spreizhülse 2 (α_{H}). Der bevorzugte Steigungswinkel beträgt 25°. Damit wird eine Selbsthemmung zwischen Bolzen und Spreizhülse erreicht, die etwa innerhalb der Grenzen eines Steigungswinkels von 20° und 50° eintritt. Der Steigungsunterschied zwischen der Spreizhülse und dem Bolzen kann beispielsweise bei einem Betonteil als Verankerungsgrund etwa 0,5% betragen. Um diesen Steigungs-unterschied auf der Länge des Gewindes auszugleichen, muß zwischen den beiden Gewindegängen des Bolzens 1 und der Spreizhülse 2 ein entsprechendes Spiel berücksichtigt werden.

## Patentansprüche

1. Spreizanker aus Metall mit einem Bolzen (1), wobei der Bolzen (1) mehrere in Form eines Gewindeganges zusammenhängende Spreizkonen (9) aufweist, und einer mit einem den Spreizkonen (9) angepaßten Innengewinde versehene Spreizhülse (2), die durch Einziehen des Bolzens (1) in einem Bohrloch eines Mauerwerks verankerbar ist wobei über die Spreizkonen (9) die Spreizhülse (2) radial nach außen gedrückt wird, **dadurch gekennzeichnet,** daß entlang des Innengewindes (10) der Spreizhülse (2) durch U-fömige Freisparungen (11) in der Spreizhülse (2) in gleichmäßigen Abständen aufspreizbare Spreizabschnitte (12) gebildet sind.

2. Spreizanker nach Anspruch 1, **dadurch gekennzeichnet,** daß zwischen den Freisparungen (11) der Seitenkanten (13) zweier benachbarter Spreizabschnitte (11) ein Steg (14) verbleibt, dessen Wandungsdicke durch Einkerbungen (15) der Außenwandung reduziert ist.

3. Spreizanker nach Anspruch 1, **dadurch gekennzeichnet,** daß der Steigungswinkel (α) der in einem Gewindegang (8, 10) angeordneten Spreizkonen (9) des Bolzens (1) und der Spreizabschnitte (12) der Spreizhülse (2) zwischen 20° und 50°, vorzugsweise 25° beträgt.

4. Spreizanker nach Anspruch 1, **dadurch gekennzeichnet,** daß zwischen den Gewindegängen (8,10) der Spreizhülse (2) und des Bolzens (1) ein Spiel besteht, und daß die Steigung (α_{H}) des Gewindegangs (10) der Spreizhülse (2) geringfügig steiler ist als die Steigung (α_{B}) des Gewindegangs (8) des Bolzens (1).

5. Spreizanker nach Anspruch 1, **dadurch gekennzeichnet,** daß die vordere Stirnseite (17) der Spreizhülse (2) mit einer Wandung (18) abgeschlossen ist.

6. Spreizanker nach Anspruch 1, **dadurch gekennzeichnet,** daß an der Außenwandung der Spreizhülse (2) vorzugsweise am hinteren Ende Vorsprünge (19) zur Drehsicherung angeordnet sind.

7. Verfahren zur Herstellung einer hülsenförmigen Spreizhülse (2) aus Metall für einen Spreizanker mit einem Bolzen (1), wobei der Bolzen (1) mehrere in einem Gewindegang zusammenhängende Spreizkonen (9) aufweist, gemäß einem der vorhergehenden Ansprüche, **dadurch gekennzeichnet,** daß die Spreizhülse (2) aus Metallpulver im Spritzgußverfahren unter Verwendung eines Bindersystems und nachträglichem Entbindern und Sintern hergestellt wird, wobei das Spritzgußwerkzeug für das Innengewinde (10) der Spreizhülse (2) einen ausdrehbaren Gewindekern aufweist.

## Claims

1. An expansible anchor of metal having a bolt (1), the bolt having several connected expander cones (9) in the form of a thread, and an expansible sleeve (2), which is provided with an internal thread matching the expander cones (9) and is arranged to be anchored in a hole drilled in masonry by drawing in the bolt (1), the expansible sleeve (2) being pressed radially outwards via the expander cones (9), **characterized in that** expandable expansible portions (12) are formed at uniform intervals along the internal thread (10) of the expansible sleeve (2) by U-shaped channels (11) in the expansible sleeve (2).

2. An expansible anchor according to claim 1, **characterized in that** between the channels (11) of the lateral edges (13) of two adjacent expansible portions (12) there remains a web (14), the wall thickness of which is reduced by grooves (15) in the outer wall.

3. An expansible anchor according to claim 1, **characterized in that** the angle of pitch (α) of the expander cones (9) of the bolt (1) arranged to form a thread (8, 10) and of the expansible portions (12) of the expansible sleeve (2) lies between 20° and 50°, and is preferably 25°.

4. An expansible anchor according to claim 1, **characterized in that** between the threads (8, 10) of the expansible sleeve (2) and the bolt (1) there is a clearance, and the pitch (α_{H}) of the thread (10) of the expansible sleeve (2) is slightly steeper than the pitch (α_{B}) of the thread (8) of the bolt (1).

5. An expansible anchor according to claim 1, **characterized in that** the front end face (17) of the expansible sleeve (2) is closed by a wall (18).

6. An expansible anchor according to claim 1, **characterized in that** projections (19) are arranged on the outer wall of the expansible sleeve (2), preferably at the rear end, to safeguard against rotation.

7. A method for the manufacture of a sleeve-shaped expansible sleeve (2) of metal for an expansible anchor with a bolt (1), the bolt (1) having several connected expander cones (9) forming a thread, according to one of the preceding claims, **characterized in that** the expansible sleeve (2) is manufactured from powdered metal by an injection-moulding method using a system of binders combined with subsequent removal of binders and sintering, the injection moulding tool having a removable thread core for the internal thread (10) of the expansible sleeve (2).

## Revendications

1. Boulon à expansion en métal comportant un fût (1), le fût (1) présentant plusieurs cônes d'expansion (9) se rejoignant sous forme d'un filet de vis, ainsi qu'une douille expansible (2) qui est munie d'un filetage intérieur adapté aux cônes d'expansion (9) et qui, si l'on tire sur le fût (1), peut s'ancrer dans un trou percé d'une maçonnerie, la douille expansible (2) étant refoulée radialement vers l'extérieur par les cônes d'expansion (9), caractérisé par le fait que, le long du filetage intérieur (10) de la douille expansible (2), des tronçons expansibles (12) sont formés à distances régulières par des découpes (11) en forme de U dans la douille expansible (2).

2. Boulon à expansion selon la revendication 1, caractérisé par le fait qu'entre les découpes (11) des bords latéraux (13) de deux tronçons expansibles voisins (11) subsiste une barrette (14) dont l'épaisseur de paroi est réduite par des entailles (15) dans la paroi extérieure.

3. Boulon à expansion selon la revendication 1, caractérisé par le fait que l'angle de pente (α) des cônes d'expansion (9) du fût (1) disposés dans un filet (8, 10) et des tronçons expansibles (12) de la douille expansible (2) vaut entre 20° et 50°, de préférence 25°.

4. Boulon à expansion selon la revendication 1, caractérisé par le fait qu'entre les filets (8, 10) de la douille expansible (2) et le fût (1) il y a un jeu et que la pente (α_{H}) du filet (10) de la douille expansible (2) est légèrement plus raide que la pente (α_{B}) du filet (8) du fût (1).

5. Boulon à expansion selon la revendication 1, caractérisé par le fait que la face frontale avant (17) de la douille expansible (2) est obturée par une paroi (18).

6. Boulon à expansion selon la revendication 1, caractérisé par le fait que sur la paroi extérieure de la douille expansible (2), de préférence à l'extrémité arrière, sont disposés des saillies (19) à titre de sécurité anti-rotation.

7. Procédé de fabrication d'une douille expansible (2) en forme de douille en métal pour un boulon à expansion comportant un fût (1), le fût (1) présentant plusieurs cônes d'expansion (9) se rejoignant en un filet, selon l'une des revendications précédentes, caractérisé par le fait que l'on fabrique la douille expansible (2) à partir d'une poudre métallique dans le procédé de moulage par injection en employant un système de liant puis en éliminant le liant et en frittant, l'outil de moulage par injection pour le filetage intérieur (10) de la douille expansible (2) présentant un noyau fileté qui peut s'extraire par rotation.
